# EUROPEAN PATENT SPECIFICATION

(11) **EP 3 148 197 B1**
(45) Date of publication and mention of the grant of the patent: **27.01.2021**
(21) Application number: 16190357.0
(22) Date of filing: 23.09.2016
(51) Int. Cl.: H04N 21/2343, H04N 21/845

(54) **COORDINATING CONTENT SEGMENTATION**
KOORDINIERUNG VON INHALTSSEGMENTIERUNG
COORDINATION DE SEGMENTATION DE CONTENU

(30) Priority: 25.09.2015 US 201514865356
(43) Date of publication of application: 29.03.2017
(73) Proprietor: Comcast Cable Communications, LLC, Philadelphia, PA 19103 (US)
(72) Inventor: Fliam, Richard, Philadelphia, PA 19103 (US); Young, Coby, Philadelphia, PA 19103 (US); Kiok, Joseph, Philadelphia, PA 19103 (US)
(74) Representative: V.O.

(56) References cited:
- WO-A1-2014/063726
- GB-A- 2 499 539
- US-A1- 2014 153 909
- MUKTA KAR ET AL: "On EBP specification and hybrid HTTP/IP multicast distribution", 103. MPEG MEETING; 21-1-2013 - 25-1-2013; GENEVA; (MOTION PICTURE EXPERT GROUP OR ISO/IEC JTC1/SC29/WG11),, no. m28237, 20 January 2013 (2013-01-20), XP030056784,

## Description

### BACKGROUND

As background, US 2014/0153909 A1 describes audio and video management for parallel transcoding. Adaptive streaming allows a client device to request content segments appropriate for the currently available network throughput. In order to support adaptive streaming of content, such as live programming or video on demand (VOD) content, content delivery systems typically make available segments of content encoded at multiple bitrates. A client device may initially begin consuming high bitrate encoded content segments and then experience a drop in available network throughput. In response, the client device may begin retrieving segments of content with a lower bitrate encoding. This allows the client device to continue consuming the content without interruption. A problem with current systems is that the segment boundaries corresponding to segments of various bitrate encodings may become out of alignment causing a segment at one bitrate encoding to have different boundaries from a segment at a second bitrate encoding. When a user device requests segments from among the different bitrate encodings, the user may experience inconsistent video playback or experience scene skipping forward (or backward) at the misaligned segment boundaries.

Some encoders insert encoder boundary points (EBPs) into encoded content streams to aide in keeping boundaries aligned during the segmentation process. For example, Mukta Kar et al. provide a description on EBP specification and hybrid HTTP/IP multicast distribution [103. MPEG MEETING; 21-1-2013 - 25-1-2013; Geneva];

However the boundary points may fall out of alignment, for various reasons, or packets of encoded content may be lost, along with any encoder boundary points in those packets, before reaching segmenters. Therefore, segment boundaries may become out of alignment among streams having various bitrate encodings.

### SUMMARY

In light of the foregoing background, the following presents a simplified summary of the present disclosure in order to provide a basic understanding of some aspects described herein. This summary is not an extensive overview, and is not intended to identify key or critical elements or to delineate the scope of the claims. The following summary merely presents various described aspects in a simplified form as a prelude to the more detailed description provided below.

In some aspects of the disclosure, a method is provided to synchronize the segmentation of multiple bitrate encodings of a content stream. In other aspects, a method is provided for determining a synchronization point for use in segmenting multiple encoded streams of a content item. In aspects of the disclosure, a controller may coordinate a segmenting process among a number of segmenters, causing the segmenters to create segments with time-aligned segment boundaries.

### BRIEF DESCRIPTION OF THE DRAWINGS

Some features herein are illustrated by way of example, and not by way of limitation, in the accompanying drawings. In the drawings, like numerals reference similar elements between the drawings.
Fig. 1 illustrates an example information access and distribution network in accordance with one or more aspects as described herein.
Fig. 2 illustrates an example computing device that may be used to implement any of the features and devices described herein.
Fig. 3 illustrates an example network configuration in accordance with one or more aspects as described herein.
Fig. 4 illustrates an example flow chart illustrating methods performed in accordance with one or more aspects as described herein.
Figs. 5-6 are example source code listings illustrating methods performed in accordance with one or more aspects as described herein.

### DETAILED DESCRIPTION

In the following description of various illustrative embodiments, reference is made to the accompanying drawings, which form a part hereof, and in which is shown, by way of illustration, various embodiments in which aspects of the disclosure may be practiced. It is to be understood that
the scope of protection of the present invention in this patent is as defined in the appended claims. Any embodiments not failing within such scope should be construed as examples which do not describe part of the present invention.

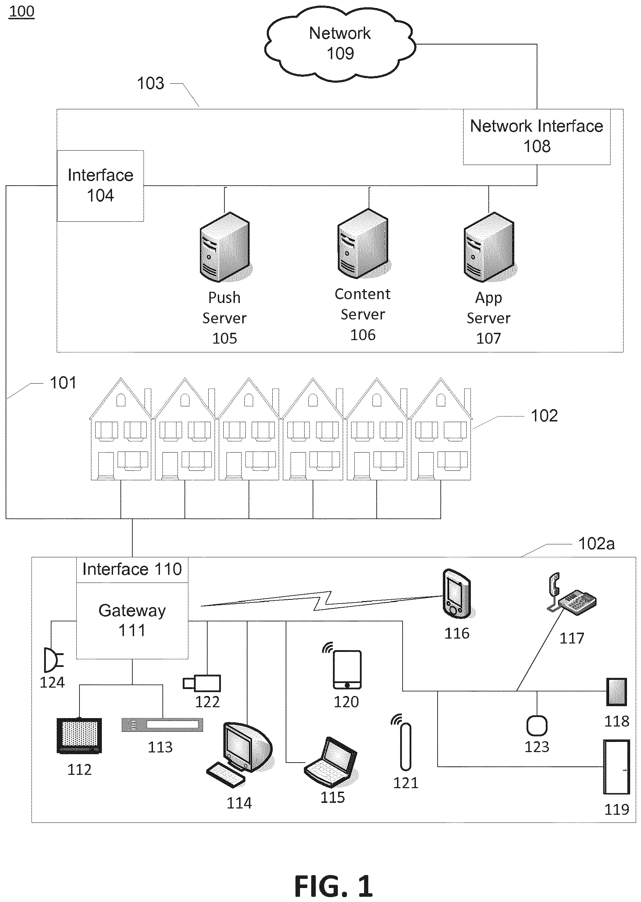

Fig. 1 illustrates an example information distribution network 100 on which many of the various features described herein may be implemented. The network 100 may be any type of information distribution network, such as satellite, telephone, cellular, wireless, etc. One example may be a wireless network, an optical fiber network, a coaxial cable network, or a hybrid fiber/coax (HFC) distribution network. Such networks 100 use a series of interconnected communication links 101 (e.g., coaxial cables, optical fibers, wireless, etc.) to connect multiple premises 102 (e.g., businesses, homes, consumer dwellings, etc.) to a local office 103 (e.g., a headend, a processing facility, etc.). The local office 103 may transmit downstream information signals onto the links 101, and each premises 102 may have a receiver used to receive and process those signals.

There may be one link 101 originating from the local office 103, and it may be split a number of times to distribute the signal to various premises 102 in the vicinity (which may be many miles) of the local office 103. The links 101 may include components not illustrated, such as splitters, filters, amplifiers, etc. to help convey the signal clearly, but in general each split introduces a bit of signal degradation. Portions of the links 101 may also be implemented with fiber-optic cable, while other portions may be implemented with coaxial cable, other lines, or wireless communication paths.

The local office 103 may include an interface 104, such as a termination system (TS), for example a cable modem termination system (CMTS) in an example of an HFC-type network, which may be a computing device configured to manage communications between devices on the network of links 101 and backend devices such as servers 105-107 (to be discussed further below). In the example of an HFC-type network, the TS may be as specified in a standard, such as the Data Over Cable Service Interface Specification (DOCSIS) standard, published by Cable Television Laboratories, Inc. (a.k.a. CableLabs), or it may be a similar or modified device instead. The TS may be configured to place data on one or more downstream frequencies to be received by modems at the various premises 102, and to receive upstream communications from those modems on one or more upstream frequencies. The local office 103 may also include one or more network interfaces 108, which can permit the local office 103 to communicate with various other external networks 109. These networks 109 may include, for example, Internet Protocol (IP) networks Internet devices, telephone networks, cellular telephone networks, fiber optic networks, local wireless networks (e.g., WiMAX), satellite networks, and any other desired network, and the interface 108 may include the corresponding circuitry needed to communicate on the network 109, and to other devices on the network such as a cellular telephone network and its corresponding cell phones.

As noted above, the local office 103 may include a variety of servers 105-107 that may be configured to perform various functions. For example, the local office 103 may include a push notification server 105. The push notification server 105 may generate push notifications to deliver data and/or commands to the various premises 102 in the network (or more specifically, to the devices in the premises 102 that are configured to detect such notifications). The local office 103 may also include a content server 106. The content server 106 may be one or more computing devices that are configured to provide content to users in the homes. This content may be, for example, video on demand movies, television programs, songs, audio, services, information, text listings, etc. In some embodiments, the content server 106 may include software to validate (or initiate the validation of) user identities and entitlements, locate and retrieve (or initiate the locating and retrieval of) requested content, encrypt the content, and initiate delivery (e.g., streaming, transmitting via a series of content fragments) of the content to the requesting user and/or device.

The local office 103 may also include one or more application servers 107. An application server 107 may be a computing device configured to offer any desired service, and may run various languages and operating systems (e.g., servlets and JSP pages running on Tomcat/MySQL, OSX, BSD, Ubuntu, Red Hat Linux, HTML5, JavaScript, AJAX and COMET). For example, an application server may be responsible for collecting television program listings information and generating a data download for electronic program guide listings. Another application server may be responsible for monitoring user media habits and collecting that information for use in selecting advertisements. Another application server may be responsible for formatting and inserting advertisements in a video stream and/or content item being transmitted to the premises 102. It should be understood by those skilled in the art that the same application server may be responsible for one or more of the above listed responsibilities.

An example premises 102a may include an interface 110 (such as a modem, or another receiver and/or transmitter device suitable for a particular network), which may include transmitters and receivers used to communicate on the links 101 and with the local office 103. The interface 110 may be, for example, a coaxial cable modem (for coaxial cable lines 101), a fiber interface node (for fiber optic lines 101), or any other desired modem device. The interface 110 may be connected to, or be a part of, a gateway interface device 111. The gateway interface device 111 may be a computing device that communicates with the interface 110 to allow one or more other devices in the home to communicate with the local office 103 and other devices beyond the local office. The gateway interface device 111 may be a set-top box (STB), digital video recorder (DVR), computer server, or any other desired computing device. The gateway interface device 111 may also include (not shown) local network interfaces to provide communication signals to other devices in the home (e.g., user devices), such as televisions 112, additional STBs 113, personal computers 114, laptop computers 115, wireless devices 116 (wireless laptops, tablets and netbooks, mobile phones, mobile televisions, personal digital assistants (PDA), etc.), telephones 117, window security sensors 118, door home security sensors 119, tablet computers 120, personal activity sensors 121, video cameras 122, motion detectors 123, microphones 124, and/or any other desired computers, sensors, and/or other devices. Examples of the local network interfaces may include Multimedia Over Coax Alliance (MoCA) interfaces, Ethernet interfaces, universal serial bus (USB) interfaces, wireless interfaces (e.g., IEEE 802.11), Bluetooth interfaces, and others.

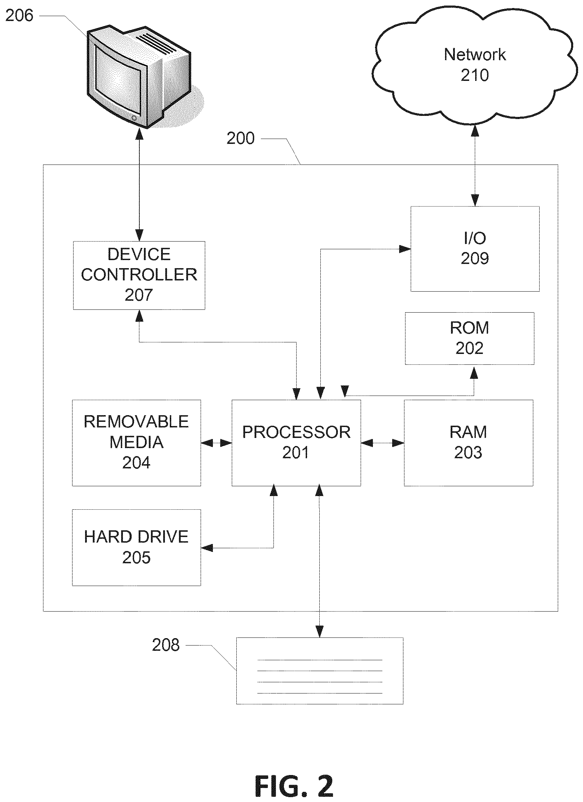

Fig. 2 illustrates general hardware elements of an example computing device 200 that can be used to implement any of the elements discussed herein and/or illustrated in the figures. The computing device 200 may include one or more processors 201, which may execute instructions of a computer program to perform any of the features described herein. The instructions may be stored in any type of computer-readable medium or memory, to configure the operation of the processor 201. For example, instructions may be stored in a read-only memory (ROM) 202, random access memory (RAM) 203, removable media 204, such as a Universal Serial Bus (USB) drive, compact disk (CD) or digital versatile disk (DVD), floppy disk drive, or any other desired electronic storage medium. Instructions may also be stored in an attached (or internal) storage 205 (e.g., hard drive, flash, etc.). The computing device 200 may include one or more output devices, such as a display 206 (or an external television), and may include one or more output device controllers 207, such as a video processor. There may also be one or more user input devices 208, such as a remote control, keyboard, mouse, touch screen, microphone, camera, etc. The computing device 200 may also include one or more network interfaces, such as input/output circuits 209 (such as a network card) to communicate with an external network 210. The network interface may be a wired interface, wireless interface, or a combination of the two. In some embodiments, the interface 209 may include a modem (e.g., a cable modem), and the network 210 may include the communication links 101 discussed above, the external network 109, an in-home network, a provider's wireless, coaxial, fiber, or hybrid fiber/coaxial distribution system (e.g., a DOCSIS network), or any other desired network.

Fig. 2 illustrates an example hardware configuration. Modifications may be made to add, remove, combine, divide, etc. components as desired. Additionally, the components illustrated may be implemented using basic computing devices and components, and the same components (e.g., processor 201, storage 202, user interface 205, etc.) may be used to implement any of the other computing devices and components described herein. For example, the various components herein may be implemented using computing devices having components such as a processor executing computer-executable instructions stored on a computer-readable medium, as illustrated in Fig. 2.

One or more aspects of the disclosure may be embodied in computer-usable data and/or computer-executable instructions, such as in one or more program modules, executed by one or more computers (such as computing device 200) or other devices to perform any of the functions described herein. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired in various embodiments. In addition, the functionality may be embodied in whole or in part in firmware or hardware equivalents such as integrated circuits, field programmable gate arrays (FPGA), and the like. Example data structures may be used to illustrate one or more aspects described herein, but these are merely illustrative examples.

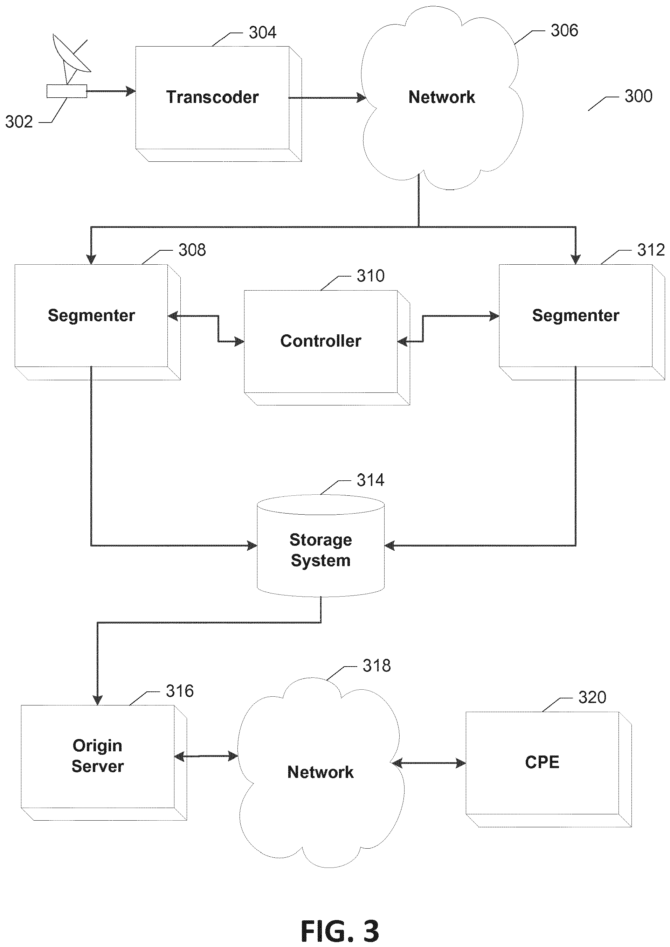

Fig. 3 illustrates an example network configuration 300 in accordance with one or more aspects as described herein. The network configuration 300 of Fig. 3 may represent a portion of the information distribution network 100 of Fig. 1 and/or the network 210 of Fig. 2. One or more of the devices illustrated in Fig. 3 may be implemented using the example computing device 200 of Fig. 2. In some embodiments, one or more content streams, for example, live programming, may be received by the satellite receiver 302. Although a satellite receiver is depicted in FIG. 3, the content streams may be received via various means, such as via an antenna or via a fiber optic cable. The received content streams may be input to one or more transcoder(s) 304 for transcoding the content streams to a format appropriate for adaptive streaming to devices, for example, for adaptive streaming to customer premises equipment (CPE), such as the CPE 320. The term "customer premises equipment" has been provided for exemplary purposes and is not intended to limit the scope of the disclosure. It would be understood by those skilled in the art that various devices at other locations may implement the methods as disclosed herein.

The transcoder 304 may comprise any computing device that incorporates the use of at least one processor and at least one memory for storing software or processor executable instructions. The transcoder 304 may comprise random access memory (RAM), non-volatile memory, and an input/output (I/O) module for communicating with other components or elements of the example network configuration 300. A single transcoder 304 is depicted in Fig. 3; however, any number of transcoders may be used according to the methods disclosed herein. In addition, one or multiple transcoding functions may be incorporated into a computing device. A transcoder may transcode one or more received content streams and output any number of transcoded streams for each received content stream. Depending on the form of the input stream the transcoder may perform an encoding or a transcoding function. The terms "transcoding" and "encoding" may be used interchangeably herein to describe a function of the transcoder. Also, the terms "transcoded stream" and "transcoded content stream" may be used to refer to the transcoded representation of the content stream.

In some embodiments, the transcoder 304 may transcode a received content stream into various media rates or bitrates. In some embodiments, a received content stream may be transcoded into multiple representations of the content stream, with each representation at a different bitrate encoding. For example, a received content stream may be transcoded into MPEG representations (streams) at 250 Kbps, 500 Kbps, 1 Mbps, and the like. In some embodiments, a received content stream may be transcoded into various other alternate or additional representations, including HEVC (h.265) representations.

In order to produce transcoded content conforming to one or more of the many adaptive streaming technologies, such as HTTP Live Streaming (HLS), HTTP Dynamic Streaming (HDS), HTTP Smooth Streaming (HSS), or Dynamic Adaptive Streaming over HTTP (DASH), the transcoded content stream should be segmented into smaller chunks. The transcoder 304 may create and associate encoder boundary points (EBP) with each transcoded stream. Each EBP may be placed at a position corresponding to a particular program time in relation to a reference clock for the content, such as a presentation timestamp (PTS) in MPEG content. The encoder boundary points may convey information for use by the segmenters 308 and 312, discussed below, in segmenting the transcoded streams. In some embodiments, an encoder boundary point may comprise a structure as defined by the CableLabs Encoder Boundary Point specification OC-SP-EBP-I01-130118. For example, the EBP may designate a suggested segmentation point in a transcoded stream.

The transcoder 304 may transmit the transcoded streams to the segmenters 308 and 312, for example, via multicast, on the network 306. The segmenters 308 and 312 may comprise any computing device that incorporates the use of at least one processor and at least one memory for storing software or processor executable instructions. The segmenters 308 and 312 may comprise random access memory (RAM), non-volatile memory, and an input/output (I/O) module for communicating with other components or elements of the example network configuration 300. In various embodiments, a segmenter may segment one or more encoded streams. One or more segmenters may be used to segment transcoded streams of a content stream.

In some embodiments, the segmenters 308 and 312 may join one or more multicast groups in order to receive the transcoded streams transmitted by the transcoder 304. A segmenter, such as the segmenter 308, may receive one or more of the transcoded streams. In some embodiments, the segmenter 308 may receive all transcoded streams of a particular content stream. In other embodiments, transcoded streams of a particular content stream may be received by more than one segmenter. In some embodiments, some of the transcoded streams of a particular content stream may be received by the segmenter 308 while other transcoded streams of the particular content stream may be received by the segmenter 312.

The segmenters 308 and 312 may segment the received transcoded streams into chunks, also referred to as segments. In some embodiments, the segmenters 308 and 312 may segment the transcoded streams according to the encoder boundary points, mentioned above. For example, in some adaptive streaming technologies, it is preferable to create segments that are time aligned, so that client devices may select segments among various media rates in response to changing network conditions and play those segments without an interruption or discontinuity in the playback of the content.

In some embodiments, the controller 310 may communicate with the segmenters 308 and 312 in order to coordinate the segmenting process. The controller 310 may comprise any computing device that incorporates the use of at least one processor and at least one memory for storing software or processor executable instructions. The controller 310 may comprise random access memory (RAM), non-volatile memory, and an input/output (I/O) module for communicating with other components or elements of the example network configuration 300. The segmenters 308 and 312 may receive and buffer packets of the transcoded stream, as output by the transcoder 304. Each segmenter may assemble a number of packets and prepare to create a segment of the assembled packets. For example, the segmenters 308 and 312 may assemble packets to create segments each representing particular amounts of play time (2 seconds of play time, for example). As will be understood by those skilled in the art, 2 seconds of play time may represent various sized segments, according to the media rate used during transcoding. In various embodiments, the segmenters may assemble packets to create segments representing various other amounts of play time, for example, they may assemble packets to create segments representing 10 seconds or play time or 8 seconds of play time.

In some embodiments, the segmenters 308 and 312 may process the assembled packets to locate an encoder boundary point. Upon encountering an EBP in the transcoded stream, the segmenter may block or otherwise halt processing and indicate (e.g., report) the EBP to the controller 310. In some embodiments, the segmenter may indicate a clock position, such as a PTS, corresponding to the EBP.

In practice, the transcoded streams received by the segmenters 308 and 312 may contain various defects or errors. For example, packets delivered via multicast are not guaranteed delivery and may therefore be lost. In addition, the transcoder 304 may experience any number of errors and may associate an EBP incorrectly with a transcoded stream, for example, an EBP in one transcoded stream may be placed incorrectly and therefore may lead or lag, for example in relation to the PTS, an EBP in another transcoded stream, for a particular content stream. In some embodiments, the controller 310 may coordinate the segmenters so that they produce segments of the transcoded stream in sync, even in cases where the transcoder has incorrectly placed an EBP or in cases where a packet has been lost. In other words, the controller may cause the segmenters to produce segments with coordinated boundaries.

Upon receiving an EBP indication from each segmenter, the controller 310 may determine a sync point for the content stream. In some embodiments, the sync point may be equated to the position of the most common EBP. For example, if there are five transcoded streams of a particular content stream, and an EBP at 6 seconds from a prior sync point is indicated for four of the five transcoded streams, while an EBP at 8 seconds from the prior sync point is indicated for the fifth transcoded stream, the controller may determine that the next sync point should correspond to the EBP at 6 seconds. In the example above, the EBP position was referenced to a prior sync point in order to simplify the example, but it is contemplated that the EBP position may be referenced to other reference points, such as the PTS in MPEG content, for example, or a starting position of the content.

Various other methods are contemplated for determining the sync point among the indicated EBPs, using the methods as described herein. For example, the sync point may be selected among the EBPs using statistical inference, including Bayesian inference, among others.

Once the controller 310 has determined the sync point, the controller 310 may communicate with the segmenters 308 and 312 to coordinate segmentation. In some embodiments, when a lagging EBP is indicated (e.g., reported) by a segmenter, the controller may cause the segmenter to continue processing and to indicate the next EBP without creating a segment.

In some embodiments, when no lagging EBP is indicated from a segmenter, the controller 310 may unblock any segmenters that have indicated an EBP in sync with the sync point and allow them to create a segment. When a segmenter is unblocked, it may continue processing the transcoded content stream to locate the next EBP. In some embodiments, the controller may cause any segmenter that has indicated a leading EBP to remain blocked at the previously indicated EBP.

In some embodiments, one or more additional controllers may be provided in a redundant arrangement whereby any additional controller may serve as backup in case of failure of another controller.

After a segmenter has generated a segment, the segment may be stored in the storage system 314. In some embodiments, the storage system may be a memory provided by the segmenter. In other embodiments, the storage system may be a network-attached storage (NAS) device. In still other embodiments, the storage system may be provided by a server, such as the origin server 316. The storage system 314 may comprise a data storage repository for storing content such as multimedia programs that may be requested by a client device. The storage system 314 may comprise magnetic hard disk drives, optical discs such as CDs and DVDs, and/or other optical media or optical drives, NAS devices, and/or any combination thereof. The programs stored in the storage system 314 may comprise any type of linear or non-linear program such as a video on demand (VOD) program. The program may comprise video, audio, or any type of multimedia program such a movies, sporting events, or shows, for example.

A Media Presentation Description (MPD) file may be generated to include links to the segments and may include information about the bitrate encoding used for each segment. In some embodiments, the manifest file may represent access information associated with segments for a particular content stream, such as a linear program or a VOD program. The MPD file may be stored at an origin server 316 (such as the content server 106 of Fig. 1) or the storage server 314 for retrieval by the CPE 320. In other embodiments, the MPD file may be stored at the segmenters 308 and/or 312. In some embodiments, the MPD file may be updated as the transcoded streams are segmented to include links to the segments.

For playback of the content, the CPE 320 may access the origin server 316 (or one or more segmenters, in embodiments where the segmenters store the MPD file) via the network 318 to retrieve the MPD file and then select segments to play on a segment by segment basis, depending on network and other conditions. In some embodiments, the network 318 may include the communication links 101 discussed above, the external network 109, the network 210, an in-home network, a provider's wireless, coaxial, fiber, or hybrid fiber/coaxial distribution system (e.g., a DOCSIS network), or any other desired network. The CPE 320 may comprise any computing device that incorporates the use of at least one processor and at least one memory for storing software or processor executable instructions. The CPE 320 may comprise random access memory (RAM), non-volatile memory, and an input/output (I/O) module for communicating with other components or elements of the example network configuration 300. In some embodiments, the CPE 320 may include a DASH client application or other HTTP streaming client application. In some embodiments, the CPE 320 may correspond to the gateway interface device 111, personal computers 114, laptop computers 115 or other devices as illustrated in Fig. 1.

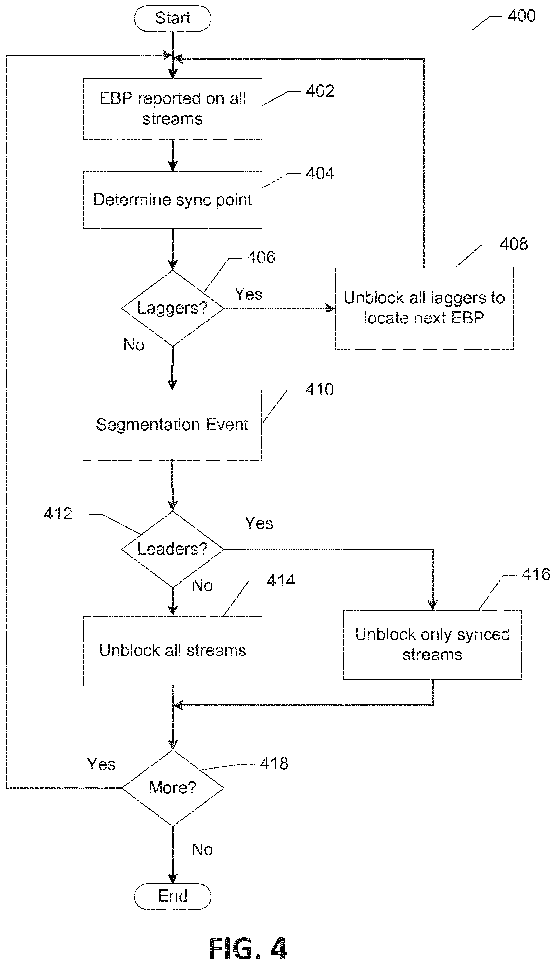

Figure 4 is an exemplary flow diagram illustrating an example method 400 in accordance with one or more disclosed features described herein. In one or more embodiments, the method illustrated in Figure 4 and/or one or more steps thereof may be performed by one or more computing devices (e.g., computing device 200, controller 310, and the like). In other embodiments, the method illustrated in Figure 4 and/or one or more steps thereof may be embodied in computer-executable instructions that are stored in a computer-readable medium, such as a non-transitory computer-readable memory. The steps in this flow diagram need not all be performed in the order specified and some steps may be omitted and/or changed in order.

At step 402, indications (e.g., reports) of encoder boundary points may be received from segmenters indicating that those segmenters have each encountered an encoder boundary point and blocked (stopped processing), awaiting instructions. At step 404, the indicated encoder boundary points may be analyzed to determine a sync point. In some embodiments, the sync point may be determined via a simple leadership election by considering the content or program time associated with each indicated encoder boundary point and choosing the most popular encoder boundary point as the sync point. In other words, of the indicated encoder boundary points, a most common value among the indicated values may be selected as the sync point.

At step 406, each encoder boundary point indicated by a segmenter may be compared to the sync point, determined above. Any segmenter indicating an encoder boundary point lagging behind the sync point may be determined to be a lagger. These segmenters may be unblocked to continue processing to the next encoder boundary point, without creating a segment. The process may then continue at 402 where the process may wait for the unblocked segmenter(s) to indicate (e.g., report) their next encoder boundary point.

If it is determined in step 406 that there are no laggers, the process may continue at step 410, where a segment event may take place according to the sync point. In some embodiments, a segment boundary may be generated by each of the segmenters at the sync point. Any ongoing segment may be ended and the next segment started at the sync point. A segment may be generated with a pre-determined time length, such as 2 seconds. In other words, a 2 second segment may be started in each transcoded stream, beginning at the sync point determined above.

At step 412, the encoder boundary points indicated by the segmenters may be compared with the sync point to determine whether any of the segmenters have indicated encoder boundary points ahead of the sync point determined above. If it is determined that one or more segmenters have indicated an encoder boundary point ahead of the sync point, these segmenters may be determined to be leaders, or segmenters that are ahead of the sync point. The process may continue at step 416 where the leading segmenters remain in a blocked state while all synced segmenters may be unblocked to continue processing. In some embodiments, a missing EBP may cause a segmenter to be determined to be a leader.

If at step 412 it is determined that there are no leading segmenters, the process may continue at step 414 where all segmenters may be unblocked to continue processing. The process may continue at step 418 where it may be determined whether there is additional content to be segmented. If there is additional content, the process may continue at step 402, otherwise the process may end.

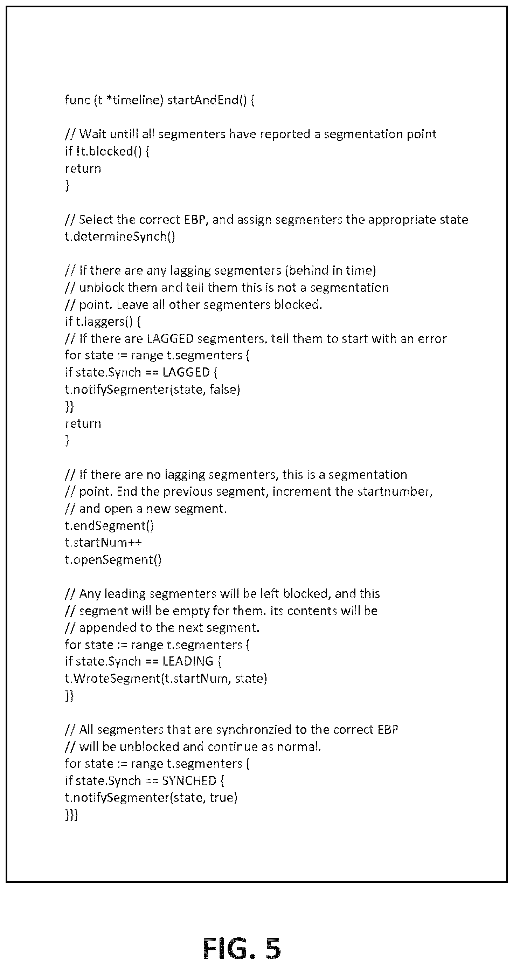

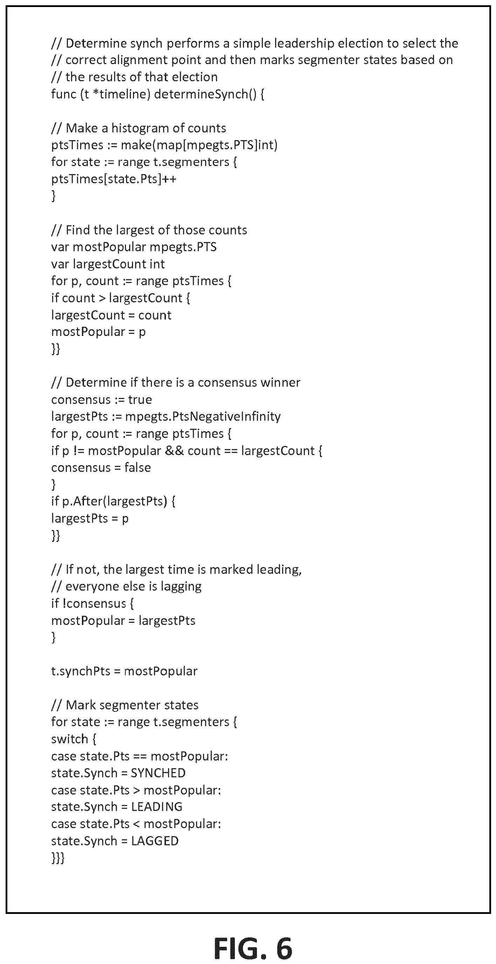

Figures 5 and 6 depict source code listings of portions of an example implementation of methods as described herein. In some embodiments, the source code may be executed by the controller 310. As shown in Figure 5, the process may begin by waiting for all segmenters to indicate the occurrence of an encoder boundary point. In some embodiments, a segmenter may block, or otherwise halt processing upon indicating the occurrence of a segmentation point. Once all segmenters have reported in, a sync point may be determined, for example, the sync point may be determined by a call to the determineSynch function, described below in relation to figure 6.

Upon return from the determineSynch function, the process may detect whether any segmenters are lagging the sync point. If one or more lagging segmenters are detected, these segmenters are caused to be unblocked and to look for the next encoder boundary point, without creating a segment. The process may then return to wait for the unblocked segmenters to indicate the occurrence of the next encoder boundary point and block. If there are no lagging segmenters, a segmentation event may be caused to occur at all segmenters. In some embodiments, each segmenter may be caused to create a segment at the sync point of pre-determined time duration. If any segmenters have indicated an encoder boundary point occurrence that is leading the sync point, those segmenters are determined to be "leading." Leading segmenters are put into the blocked state at the indicated encoder boundary point. For segmenters that have indicated an encoder boundary point that is the same as the sync point, those segmenters are unblocked to look for the next encoder boundary point. The process may then return to the beginning and wait for all unblocked segmenters to indicate an encoder boundary point and to block.

Figure 6 depicts a source code listing of an example implementation of the determineSynch function. The process starts by determining the most popular encoder boundary point occurrence that has been indicated by a segmenter. The most popular encoder boundary point occurrence is determined as the sync point. Each of the segmenters is checked to see whether the indicated encoder boundary point occurrence matches the sync point ("synched"), is ahead of the sync point ("leading") or is behind the sync point "lagged"). The state of each segmenter is noted and the process returns.

The above steps may be simultaneously taking place for any number of encoded streams.

The example implementation depicted in the source code listings of Figures 5 and 6 has been provided for exemplary purposes and is not intended to limit the scope of the disclosure. It would be understood by those skilled in the art that various other implementations may provide the methods as disclosed herein. For example, rather than blocking at EBP markers, in some implementations, the segmenters 308 and 312 may be allowed to continue operating and the controller 310 may communicate with the segmenters 308 and 312 to coordinate segmentation at a determined sync point.

## Claims

1. A method for controlling segmentation of transcoded content, the method comprising:
receiving (402), by a computing device and from a plurality of segmenters that are blocked, respective indications of a plurality of different encoder boundary points that correspond to a plurality of different transcoded content streams associated with a source content stream;
selecting (404), based on an analysis of the plurality of different encoder boundary points, a synchronization point that is associated with a time position of a first transcoded content stream of the plurality of different transcoded content streams;
determining (406) whether there is a lagger segmenter, among the plurality of segmenters, that indicated an encoder boundary point that is earlier in time than the synchronization point;
if there is a lagger segmenter, unblocking the lagger segmenter (408);
if there is no lagger segmenter:
determining (412) whether there is a leader segmenter, among the plurality of segmenters, that indicated an encoder boundary point that is later in time than the synchronization point (416);
if there is a leader segmenter, maintaining blocking of the leader segmenter while unblocking synced segmenters, of the plurality of segmenters, to indicate a subsequent encoder boundary point; and
if there is no leader segmenter, unblocking all of the plurality of segmenters to indicate subsequent encoder boundary points in the plurality of transcoded content streams (414).

2. The method of claim 1, further comprising:
based on determining that there is no lagger segmenter among the plurality of segmenters, causing segmenting of each of the plurality of different transcoded content streams.

3. The method of any one of claims 1-2, further comprising:
after the synced segmenters indicate subsequent encoder boundary points, determining that there is no leader segmenter among the plurality of segmenters, and unblocking all of the plurality of segmenters to indicate subsequent encoder boundary points in the plurality of transcoded content streams.

4. The method of any one of claims 1-3, wherein the determining whether there is a leader segmenter comprises determining whether an expected encoder boundary point has been missed.

5. The method of any one of claims 1-4, wherein the indications of the plurality of different encoder boundary points indicate that one or more of the plurality of different encoder boundary points are out of alignment.

6. The method of any one of claims 1-5, further comprising:
receiving the plurality of different transcoded content streams, wherein each of the plurality of different transcoded content streams comprises at least one encoder boundary point of the plurality of different encoder boundary points.

7. The method of claim 2, wherein the causing segmenting comprises causing segmenting of each of the plurality of different transcoded content streams at a position corresponding to the synchronization point.

8. The method of any one of claims 1-7, further comprising:
after the synced segmenters indicate subsequent encoder boundary points:
determining that there is a lagger segmenter among the plurality of segmenters;
determining a second transcoded content stream, of the plurality of different transcoded content streams, that is associated with the lagger segmenter, wherein the second transcoded content stream is not segmented at a position corresponding to the encoder boundary point that is earlier in time than the synchronization point; and
causing the lagger segmenter to indicate another encoder boundary point.

9. The method of any one of claims 1-8, wherein the determining whether there is a leader segmenter comprises:
determining that an expected encoder boundary point corresponding to the synchronization point is missing.

10. The method of any one of claims 1-9, wherein the plurality of different transcoded content streams comprises a plurality of MPEG transport streams.

11. The method of any one of claims 1-10, wherein the synchronization point comprises a most common encoder boundary point among the plurality of different encoder boundary points.

12. The method of any one of claims 1-11, wherein each of the plurality of different transcoded content streams is encoded at a different bitrate.

13. The method of any one of claims 1-12, wherein each encoder boundary point, of the plurality of different encoder boundary points, comprises a transcoder-suggested segment boundary of a corresponding one of the plurality of different transcoded content streams.

14. A computing device, configured to perform the method of any one of claims 1-13.

15. A system (300) comprising:
a first computing device (304) configured to:
receive a source content stream,
generate a plurality of different transcoded content streams by transcoding the source content stream, and
transmit the transcoded content streams to a pluratilty of segmenters (308,312); and
a second computing device configured to control the plurality of segmenters (308,312) according to the method of any one of claims 1-13.

## Patentansprüche

1. Verfahren zum Steuern der Segmentierung von transkodiertem Inhalt, wobei das Verfahren umfasst:
Empfangen (402) durch eine Computervorrichtung und von mehreren Segmentierern, die blockiert sind, entsprechende Anzeigen mehrerer verschiedener Codierergrenzpunkte, die mehreren verschiedenen transkodierten Inhaltsströme entsprechen, die einem Quellinhaltsstrom zugeordnet sind;
Auswählen (404) basierend auf einer Analyse mehrerer verschiedener Codierergrenzpunkte eines Synchronisationspunkts, der einer Zeitposition eines ersten transkodierten Inhaltsstroms mehrerer verschiedener transkodierter Inhaltsströme zugeordnet ist;
Bestimmen (406), ob es unter den mehreren Segmentierern einen Lagger-Segmentierer gibt, der einen Codierergrenzpunkt angibt, der zeitlich früher als der Synchronisationspunkt ist;
wenn es einen Lagger-Segmentierer gibt, Entblocken des Lagger-Segmentierers (408);
wenn es keinen Lagger-Segmentierer gibt:
Bestimmen (412), ob es einen Leader-Segmentierer unter mehreren Segmentierern gibt, der einen Codierergrenzpunkt angibt, der später als der Synchronisationspunkt (416) ist;
wenn es einen Leader-Segmentierer gibt, der das Blockieren des Leader-Segmentierers beibehält, während synchronisierte Segmentierer mehrerer Segmentierer entblockt werden, um einen nachfolgenden Codierergrenzpunkt anzugeben; und
wenn es keinen Leader-Segmentierer gibt, Entblocken aller der mehreren Segmentierer, um nachfolgende Codierergrenzpunkte in mehreren transkodierten Inhaltsströmen (414) anzugeben.

2. Verfahren nach Anspruch 1, ferner umfassend:
basierend auf dem Bestimmen, dass es keinen Lagger-Segmentierer unter mehreren Segmentierern gibt, der eine Segmentierung von jedem der mehreren verschiedenen transkodierten Inhaltsströmen bewirkt.

3. Verfahren nach einem der Ansprüche 1 bis 2, ferner umfassend:
nachdem die synchronisierten Segmentierer nachfolgende Codierergrenzpunkte angegeben haben, Bestimmen, dass es keinen Leader-Segmentierer unter mehreren Segmentierern gibt, und Entblocken aller der mehreren Segmentierer, um nachfolgende Codierergrenzpunkte in mehreren transkodierten Inhaltsströmen anzuzeigen.

4. Verfahren nach einem der Ansprüche 1 bis 3, wobei das Bestimmen, ob es einen Leader-Segmentierer gibt, das Bestimmen umfasst, ob ein erwarteter Codierergrenzpunkt übersehen wurde.

5. Verfahren nach einem der Ansprüche 1 bis 4, wobei die Anzeigen mehrerer verschiedener Codierergrenzpunkte angeben, dass einer oder mehrere der mehreren verschiedenen Gebergrenzpunkte nicht ausgerichtet sind.

6. Verfahren nach einem der Ansprüche 1 bis 5, ferner umfassend:
Empfangen mehrerer verschiedener transkodierter Inhaltsströme, wobei jeder der mehreren unterschiedlichen transkodierten Inhaltsströme wenigstens einen Codierergrenzpunkt mehrerer verschiedener Codierergrenzpunkte umfasst.

7. Verfahren nach Anspruch 2, wobei das Bewirken des Segmentierens das Bewirken des Segmentierens von jedem der mehreren verschiedenen transkodierten Inhaltsströmen an einer Position umfasst, die dem Synchronisationspunkt entspricht.

8. Verfahren nach einem der Ansprüche 1 bis 7, ferner umfassend:
nachdem die synchronisierten Segmentierer nachfolgende Codierergrenzpunkte angezeigt haben:
Bestimmen, dass es einen Lagger-Segmentierer unter mehreren von den Segmentierern gibt;
Bestimmen eines zweiten transkodierten Inhaltsstroms aus den mehreren verschiedenen transkodierten Inhaltsströmen, die dem Lagger-Segmentierer zugeordnet sind, wobei der zweite transkodierte Inhaltsstrom nicht an einer Position segmentiert wird, die dem Codierergrenzpunkt entspricht, der zeitlich früher als der Synchronisationspunkt ist; und
Bewirken, dass der Lagger-Segmentierer einen anderen Codierergrenzpunkt angibt.

9. Verfahren nach einem der Ansprüche 1 bis 8, wobei das Bestimmen, ob es einen Leader-Segmentierer gibt, umfasst:
Bestimmen, dass ein erwarteter Codierergrenzpunkt, der dem Synchronisationspunkts entspricht, fehlt.

10. Verfahren nach einem der Ansprüche 1 bis 9, wobei die mehreren verschiedenen transkodierten Inhaltsströme mehrere MPEG-Transportströme umfassen.

11. Verfahren nach einem der Ansprüche 1 bis 10, wobei der Synchronisationspunkt einen am häufigsten verwendeten Codierergrenzpunkt unter mehreren verschiedenen Codierergrenzpunkten umfasst.

12. Verfahren nach einem der Ansprüche 1 bis 11, wobei jeder der mehreren unterschiedlichen transkodierten Inhaltsströme mit einer unterschiedlichen Bitrate codiert wird.

13. Verfahren nach einem der Ansprüche 1 bis 12, wobei jeder Codierergrenzpunkt mehrerer verschiedener Codierergrenzpunkte eine vom Transcodierer vorgeschlagene Segmentgrenze eines entsprechenden der mehreren unterschiedlichen transkodierten Inhaltsströme umfasst.

14. Computervorrichtung, die konfiguriert ist, um das Verfahren nach einem der Ansprüche 1 bis 13 durchzuführen.

15. System (300), umfassend:
eine erste Computervorrichtung (304), die konfiguriert, um:
einen Quellinhaltsstrom zu empfangen,
mehrere verschiedene transkodierte Inhaltsströme durch Transcodieren des Quellinhaltsstroms zu erzeugen und
die transkodierten Inhaltsströme an mehrere Segmentierer (308, 312) zu übertragen; und
eine zweite Computervorrichtung, die konfiguriert ist, um die mehreren Segmentierer (308, 312) nach dem Verfahren nach einem der Ansprüche 1 bis 13 zu steuern.

## Revendications

1. Procédé pour contrôler la segmentation de contenu transcodé, le procédé comprenant :
la réception (402), par un dispositif informatique et en provenance d'une pluralité de segmenteurs qui sont bloqués, d'indications respectives d'une pluralité de points de limite de codeur différents qui correspondent à une pluralité de flux de contenu transcodés différents associés à un flux de contenu source ;
la sélection (404), sur la base d'une analyse de la pluralité de points de limite de codeur différents, d'un point de synchronisation qui est associé à une position temporelle d'un premier flux de contenu transcodé de la pluralité de flux de contenu transcodés différents ;
la détermination (406) de s'il y a un segmenteur en retard, parmi la pluralité de segmenteurs, qui a indiqué un point de limite de codeur qui est antérieur au point de synchronisation ;
s'il y a un segmenteur en retard, le déblocage du segmenteur en retard (408) ;
s'il n'y a pas de segmenteur en retard :
la détermination (412) de s'il y a un segmenteur en avance, parmi la pluralité de segmenteurs, qui a indiqué un point de limite de codeur qui est postérieur au point de synchronisation (416) ;
s'il y a un segmenteur en avance, le maintien du blocage du segmenteur en avance tout en débloquant des segmenteurs synchronisés, de la pluralité de segmenteurs, pour indiquer un point de limite de codeur subséquent ; et
s'il n'y a pas de segmenteur en avance, le déblocage de la totalité de la pluralité de segmenteurs pour indiquer des points de limite de codeur subséquents dans la pluralité de flux de contenu transcodés (414).

2. Procédé selon la revendication 1, comprenant en outre :
sur la base de la détermination qu'il n'y a pas de segmenteur en retard parmi la pluralité de segmenteurs, le fait de provoquer la segmentation de chacun de la pluralité de flux de contenu transcodés différents.

3. Procédé selon l'une quelconque des revendications 1 à 2, comprenant en outre :
après que les segmenteurs synchronisés ont indiqué des points de limite de codeur subséquents, la détermination qu'il n'y a pas de segmenteur en avance parmi la pluralité de segmenteurs, et le déblocage de la totalité de la pluralité de segmenteurs pour indiquer des points de limite de codeur subséquents dans la pluralité de flux de contenu transcodés.

4. Procédé selon l'une quelconque des revendications 1 à 3, dans lequel la détermination de s'il y a un segmenteur en avance comprend la détermination de si un point de limite de codeur attendu a été manqué.

5. Procédé selon l'une quelconque des revendications 1 à 4, dans lequel les indications de la pluralité de points de limite de codeur différents indiquent qu'un ou plusieurs de la pluralité de points de limite de codeur différents sont désalignés.

6. Procédé selon l'une quelconque des revendications 1 à 5, comprenant en outre :
la réception de la pluralité de flux de contenu transcodés différents, où chacun de la pluralité de flux de contenu transcodés différents comprend au moins un point de limite de codeur de la pluralité de points de limite de codeur différents.

7. Procédé selon la revendication 2, dans lequel le fait de provoquer la segmentation comprend le fait de provoquer la segmentation de chacun de la pluralité de flux de contenu transcodés différents à une position correspondant au point de synchronisation.

8. Procédé selon l'une quelconque des revendications 1 à 7, comprenant en outre :
après que les segmenteurs synchronisés ont indiqué des points de limite de codeur subséquents :
la détermination qu'il y a un segmenteur en retard parmi la pluralité de segmenteurs ;
la détermination d'un second flux de contenu transcodé, de la pluralité de flux de contenu transcodés différents, qui est associé au segmenteur en retard, où le second flux de contenu transcodé n'est pas segmenté à une position correspondant au point de limite de codeur qui est antérieur au point de synchronisation ; et
le fait d'amener le segmenteur en retard à indiquer un autre point de limite de codeur.

9. Procédé selon l'une quelconque des revendications 1 à 8, dans lequel la détermination de s'il y a un segmenteur en avance comprend :
la détermination qu'un point de limite de codeur attendu correspondant au point de synchronisation est manquant.

10. Procédé selon l'une quelconque des revendications 1 à 9, dans lequel la pluralité de flux de contenu transcodés différents comprend une pluralité de flux de transport MPEG.

11. Procédé selon l'une quelconque des revendications 1 à 10, dans lequel le point de synchronisation comprend un point de limite de codeur le plus commun parmi la pluralité de points de limite de codeur différents.

12. Procédé selon l'une quelconque des revendications 1 à 11, dans lequel chacun de la pluralité de flux de contenu transcodés différents est codé à un débit binaire différent.

13. Procédé selon l'une quelconque des revendications 1 à 12, dans lequel chaque point de limite de codeur, de la pluralité de points de limite de codeur différents, comprend une limite de segment suggérée par transcodeur de l'un correspondant de la pluralité de flux de contenu transcodés différents.

14. Dispositif informatique, configuré pour effectuer le procédé selon l'une quelconque des revendications 1 à 13.

15. Système (300) comprenant :
un premier dispositif informatique (304) configuré pour :
recevoir un flux de contenu source,
générer une pluralité de flux de contenu transcodés différents en transcodant le flux de contenu source, et
transmettre les flux de contenu transcodés à une pluralité de segmenteurs (308, 312) ; et
un second dispositif informatique configuré pour contrôler la pluralité de segmenteurs (308, 312) selon le procédé de l'une quelconque des revendications 1 à 13.
